# EUROPÄISCHE PATENTSCHRIFT

(11) **EP 3 625 523 B1**
(45) Veröffentlichungstag und Bekanntmachung des Hinweises auf die Patenterteilung: **20.10.2021**
(21) Anmeldenummer: 18723887.8
(22) Anmeldetag: 18.05.2018
(51) Int. Cl.: G01F 11/06

(54) **DOSIERVORRICHTUNG FÜR EINE FLÜSSIGKEITSZUFUHR MIT STUTZEN**
DOSING DEVICE FOR A LIQUID WITH A NOZZLE
DISPOSITIF DE DOSAGE POUR L'ALIMENTATION LIQUIDE AVEC UN ÉLÉMENT TUBULAIRE

(30) Priorität: 19.05.2017 EP 17172085
(43) Veröffentlichungstag der Anmeldung: 25.03.2020
(73) Patentinhaber: Capartis AG, 8200 Schaffhausen (CH)
(72) Erfinder: WOHLGENANNT, Herbert, 8200 Schaffhausen (CH)
(74) Vertreter: Hepp Wenger Ryffel AG
(86) Internationale Anmeldenummer: PCT/EP2018/063227
(87) Internationale Veröffentlichungsnummer: WO 2018/211125

(56) Entgegenhaltungen:
- WO-A1-2015/150250
- GB-A- 751 165
- US-A- 5 280 846

## Beschreibung

Die Erfindung betrifft eine Dosiervorrichtung, um eine Flüssigkeitszufuhr, sei es aus einem Behälter mit Stutzen, etwa aus einer Kunststoff- oder Pet-Flasche oder aus einem Schlauch mit Stutzen in dosierten Portionen auszugeben.

Dosierverschlüsse oder Vorrichtungen zum dosierten Ausgeben von Flüssigkeiten sind in mehreren Ausführungen bekannt. Ein sehr weit entwickelter Dosierverschluss wurde mit der WO 2015/150250 A1 bekannt, von der gleichen Anmelderin selbst, publiziert am 8. Oktober 2015. Er ist für einen Stutzen zum Ausgeben von definierten Dosen aus einem Behälter oder Schlauch bestimmt und besteht aus einem auf den Stutzen aufschraub- oder aufprellbaren, wahlweise mit separatem Deckel verschliessbaren Ausguss-Aufsatz. Daran ist ein Verschlusskörper gehalten, welcher ein bewegliches Dosiermittel enthält, zur Ausgabe einer bestimmten Dosis pro Ausgabezyklus. Als Besonderheit bildet das Dosiermittel eine Dosier-Steuerkammer mit variablem Volumen, wobei diese Dosier-Steuerkammer während des Ausgiessen einer Dosis nicht etwa von voll zu leer entleert wird, sondern vielmehr von leer zu voll befüllt wird. Diese Dosier-Steuerkammer wird von zwei stationären und zwei verschiebbaren Wänden begrenzt, indem am Verschlusskörper zwei zueinander parallel verlaufende, beliebig geformte, axial zum Stutzen verlaufende Seitenwände vorhanden sind, deren eine gegenüber der anderen in axialer Richtung zum Stutzen am Verschlusskörper verschiebbar gelagert ist. Die am Verschlusskörper stationäre Seitenwand bildet an ihrem dem Behälter zugewandten Ende eine zu ihr in einem Winkel abstehende Bodenwand, welche an die gegenüberliegende bewegliche Seitenwand anschliesst. Die bewegliche Seitenwand andrerseits weist an ihrem der Mündung des Behälterstutzens zugewandten Ende eine zu ihr in einem Winkel abstehende Deckenwand auf, die ihrerseits an die stationäre Seitenwand anschliesst. Das von allen diesen vier Wänden umschlossene variable Volumen bildet dann die Dosier-Steuerkammer. Für einen Dosierzyklus bei gestürzter Lage der Dosiervorrichtung passiert das Folgende: Die beweglichen Seitenwände und die bewegliche Deckenwand ausgehend von ihrer obersten Lage - in dieser gestürzten Lage - und mit gefülltem Ausgiessraum unterhalb der beweglichen Deckenwand, werden zunächst durch Erhöhen des wirksamen Druckes oberhalb der Deckenwand rein axial abwärts bewegt, unter Befüllens der Dosier-Steuerkammer und gleichzeitigem Ausströmen von Flüssigkeit aus dem Raum unterhalb des durch die bewegliche Seitenwand und ihrer Deckenwand gebildeten Dosierkolbens, der sich beim Ausgiessen in den Ausgiessraum schiebt. Das erfolgt bis die beweglichen Teile das Ausgussloch des Ausgusses verschliessen, indem das Ausgussloch von der Deckenwand dichtend überdeckt ist. Hernach wird der Druck oberhalb der Deckenwand wieder reduziert und diese fährt wieder aufwärts, unter erneutem Befüllen des Ausgiessraumes durch Umströmen der beweglichen Seitenwand nach unten und gleichzeitigem Entleeren der Dosier-Steuerkammer, bis die beweglichen Teile ihren Ausgangszustand erreicht haben und der Dosierzyklus somit abgeschlossen ist. Der Weg, welchen die beweglichen Wände, das heisst die bewegliche Seitenwand und die daran abstehende Deckenwand zurücklegen können, bestimmt dabei das Dosiervolumen. Sobald diese Steuerkammer befüllt ist, stoppt der Ausfluss aus dem Dosierverschluss. Es wird aber stets die gleiche Dosis ausgegeben.

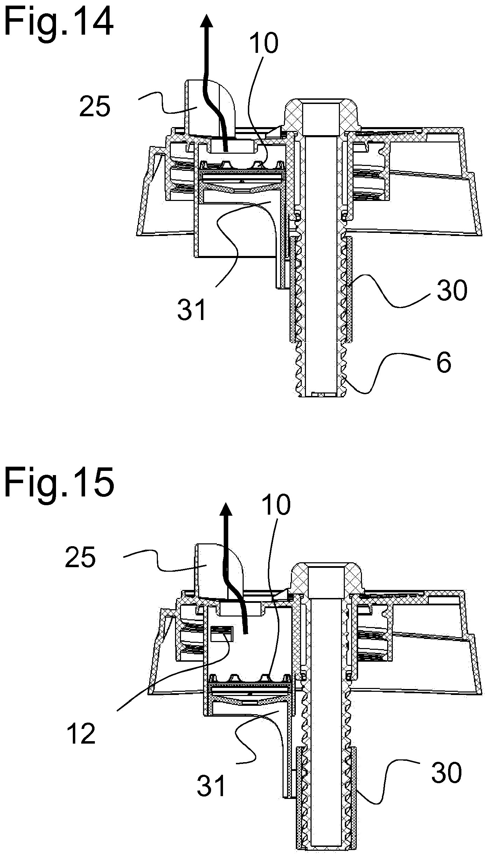

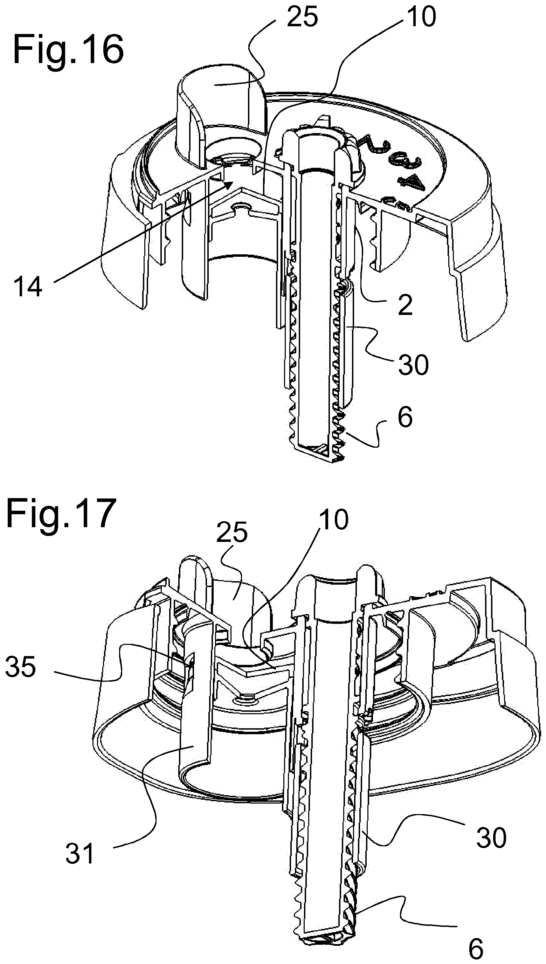

Unbestritten wird in diesem Dokument WO 2015/150250 A1 auch eine stufenlose Verstellung des Ausgiessvolumens erwähnt und auch eine Variante für die Umsetzung offenbart. Es ist hierzu ein Begrenzer 6 mit seinem schraubenlinienförmigen Steg 28 vorgesehen, wie in Figur 15 zu erkennen. In dieser Abbildung ist der sonst einstückig mit dem Begrenzer 6 verbundene Drehkörper 2 weggelassen. Dafür sieht man in dieser Abbildung die beiden Anschlagnocken 26,27 zur Begrenzung des Drehbereichs des Drehkörpers 2. Wenn der Begrenzer 6 mit dem Drehkörper 2 gegenüber dem Vorrichtungskörper 1 verdreht wird, so bewirkt das ein stufenloses Verstellen der Dosiermenge zwischen einem Minimum und einem Maximum. Die Figur 16 zeigt dann die Dosiervorrichtung zu diesem stufenlosen Verstellen der Dosiermenge von unten gesehen, mit Einstellung für eine minimale Dosiermenge. Der Drehkörper 2 ist hier im Uhrzeigersinn gedreht worden, bis der Nocken 24 am Anschlagnocken 27 anschlug. Der Begrenzer 6 steht dann so, dass der Fortsatz 11 am Dosierkolben 10 nur noch einen minimalen Weg nach oben zurücklegen kann. Umgekehrt zeigt die Figur 17 die Dosiervorrichtung zum stufenlosen Verstellen der Dosiermenge von unten gesehen, mit der Einstellung für die maximale Dosiermenge. Der Drehkörper 2 wurde hier im Gegenuhrzeigersinn im Verschlusskörper 1 gedreht, bis sein Nocken 24 am Anschlagnocken 26 einen Anschlag fand. Dabei ist der Begrenzer 6 auf der Oberseite der Dosiervorrichtung in einer solchen Position, dass der Fortsatz 11 auf dem Dosierkoben 10 einen maximalen Weg zurücklegen kann. Es ist klar, dass alle Zwischenpositionen zwischen den beiden Anschlagnocken 26,27 einstellbar sind. In den Figuren 31 bis 35 ist eine ganz besondere Ausführung dieses Dosierverschlusses dargestellt, jeweils in einem Teilschnitt, um den Blick in das Innere freizugeben. Diese erlaubt eine stufenlose Einstellung des Dosiervolumens bzw. des Volumens der Dosier-Steuerkammer zwischen einem Minimum und einem Maximum, und ausserdem auch die Einstellung von Zwischenlagen, in denen der Dosierverschluss einen freien Ausfluss ohne Dosierung gewährleistet.

Weiter ist aus US 5 280 846 A ein Flüssigkeits- und Granulatspender bekannt. Dieser weist eine Spindel für die Realisierung eines Portionierungsprinzips mit einem Behälter auf. Durch Umdrehen füllt sich dieser Behälter, der bei nochmaligem Drehen um 180 Grad entleert und eine Portion ausgibt, und zwar jeweils nur soviel wie im Behälter Platz hat. Mit einem Flüssigkeits- und Granulatspender nach US 5 280 846 A wird nie mehr ausgegossen oder ausgeschüttet als dieser Behälter fasst, der als Dosierkammer wirkt. Die Spindel verstellt bloss diese relativ kleine Dosierkammer. Zudem greift die Spindel direkt in das zu steuernde Element ein und macht das Abdichten der Platte im Dosiermessbecher schwierig.

Die Aufgabe der vorliegenden Erfindung ist es, ausgehend von diesen oben beschriebenen Lösungen und insbesondere ausgehend von WO 2015/150250 A1 und dem darin detailliert offenbarten Dosierverschluss sowie in Berücksichtigung der Lösung gemäss US 5 280 846 A einen Dosierverschluss zu schaffen, welcher ein stufenlos veränderbares Dosiervolumen abgibt. Dabei soll diese Veränderung des Dosiervolumens ganz einfach einstellbar sein und das Dosiervolumen soll skalierbar sein, mit Anzeige der verschiedenen Volumina in einer Skala auf dem Dosierverschluss. Die Basiseigenschaften des bisher schon bekannten Dosierverschlusses nach WO 2015/150250 A1 sollen dabei beibehalten werden. Das bedeutet, dass auch dieser weiterentwickelte Dosierverschluss mit einer Minimalzahl von spritztechnisch einfachen Teilen auskommen soll, ohne jegliche Federelemente, und dass diese Teile höchst einfach zu montieren sind, weiter dass seine Anwendung narrensicher ist, dass der Dosierverschluss nicht verstopft und eine eingestellte Dosierung zuverlässig durch einfaches Kippen in eine Ausgiesslage oder durch Stürzen und leichtes Quetschen des Behälters ausgiessbar ist. Genauso soll ein Ausgiessen aus einem zu einem Schlauch zugehörigen Balg ermöglicht werden, aus dem die Flüssigkeit zugeführt wird. Die Dosierung beliebiger einstellbarer Volumina soll genauso zuverlässig sein, egal ob der Behälter ganz voll, halbvoll oder schon fast leer ist. Die Dosiermenge soll zwischen einem Minimum und einem Maximum stufenlos regulierbar sein, wobei das Maximum weit grösser als das gesamte Volumen des kompletten Dosierverschlusses sein soll. In einer weiteren Einstellung soll der Verschluss auch überhaupt gar kein Medium ausgiessen, also dichthalten, und in einer noch weiteren Einstellung soll er ein kontinuierliches undosiertes Ausgiessen ermöglichen. Schliesslich soll dieser Dosierverschluss bei vergleichbar grossen auszugebenden Dosen sehr viel leichter, etwa halb so schwer sein wie jener nach WO 2015/150250 A1 und weiter soll dieser Dosierverschluss ganz wesentlich kostengünstiger herstellbar sein als die bekannten Lösungen.

Diese Aufgabe wird gelöst von einer Dosiervorrichtung für einen Stutzen zum Ausgiessen von definierten Dosen aus einem Behälter oder Schlauch, bestehend aus einem auf den Stutzen aufschraub- oder aufprellbaren, wahlweise mit separatem Deckel verschliessbaren Ausguss-Aufsatz mit einer Dosier-Steuerkammer mit variablem Volumen, die beim Ausgiessen von leer zu voll befüllt wird, wobei diese Dosier-Steuerkammer vom Raum zwischen einem Steuerkammer-Begrenzer und dem Innern eines Dosierkolbens gebildet wird, die sich beim Ausgiessen einer Dosis füllt, wobei der Dosierkolben bei voller Steuerkammer den Ausguss verschliesst, und die sich *dadurch auszeichnet,* dass auszugiessende Dosismengen einstellbar sind, indem der Weg des Dosierkolbens auf seiner dem Behälter oder Schlauch zugewandten Seite begrenzbar ist, indem in der Dosiervorrichtung in einer axialen Spindelfassung eine Spindel drehbar gelagert ist, die oben einen Drehknopf aufweist, der vorne dichtend aus der Dosiervorrichtung ragt, und dass die Spindel mit ihrem Gewinde mit ihrem Endbereich in die Gewindeabschnitte im Innern einer Verstellmuffe eingreift und die Verstellmuffe aussen mit einem Steuerkammer-Begrenzer für den Dosierkolben verbunden ist, sodass bei Drehung der Spindel der Steuerkammer-Begrenzer in seiner Lage axial verschiebbar und somit die Lage für das Beginnen des Ausgiessens einer Dosis in jeder Einstellposition begrenzbar ist, sodass der Weg des Dosierkolbens und somit das Füllvolumen der Steuerkammer wählbar ist.

Gegenüber WO 2015/150250 A1 ist der neu beanspruchte Mechanismus mit Spindel und Stab wesentlich billiger herzustellen und es kann damit ein viel grösserer Bereich von einstellbaren Dosiermengen realisiert werden. Die Komplexität des Systems wird sehr deutlich reduziert und das macht diesen Dosierverschluss noch zuverlässiger und genauer. Die Lösung mit einem Drehknopf mit Pfeilen zur Markierung der Dosierungen ist dabei intuitiv verständlich und übersichtlicher. Diese Lösung mit einer Spindel wie beansprucht ist nicht einmal halb so schwer wie das Verstellprinzip nach WO 2015/150250 A1! Als Besonderheit wird der Inhalt der Steuerkammer selbst gar nicht ausgegossen, was den Vorteil bringt, dass die Ausgiessdosis ein Vielfaches des Inhaltes der Steuerkammer sein kann. Es können damit Dosen ausgegeben werden, die ein Vielfaches grösser sind als das gesamte Volumen des Verschlusses, was kein Verschluss zuvor ermöglichte. Diese ganz raffinierte, spezifische Art und Weise der Umsetzung einer stufenlosen Verstellbarkeit mit einem Spindel/Stab ist im Stand der Technik unbekannt, Die Spindel, die dazu sogar noch hohl sein kann wird dazu verwendet, die kleine Steuerkammer zu verändern und daher die Ausgiessdosis auf bis ein Vielfaches des Volumens des ganzen Verschlusses anzupassen.

Eine Spindel mag im Grundsatz bekannt sein, aber so wie gemäss US 5 280 846 A wirkend würde sie das vorliegende System funktionsuntüchtig machen, da das bewegliche Teil des systemtypischen Stuhles keinen Platz fände und noch dazu das Ausgiessen selber verunmöglichen würde. US 5 280 846 A stellt ein komplett anderes Prinzip dar, das mit dem vorliegenden kaum vergleichbar ist, denn mit dem vorliegenden System muss nicht jedesmal erst eine Dosierkammer befüllt werden, die dann einfach entleert wird, womit die maximale Dosiermenge dem Volumen der Dosierkammer entspricht.

Verschiedene Ausführungen dieser Dosiervorrichtung und ihre Teile dieser Dosiervorrichtung für einen Stutzen zum Ausgiessen von definierten Dosen aus einem Behälter oder Schlauch nach Anspruch 1 werden nachfolgend anhand der Zeichnungen beschrieben und die Funktion dieser Teile und die Wirkungsweise dieser Dosiervorrichtungen und insbesondere des Mechanismus für die Einstellung der Dosiermenge werden ausführlich erklärt und erläutert.

Es zeigt:
- Figur 1:: Das erste, stationäre Teil des Dosiermittels, nämlich den Becher mit Fenster;
- Figur 2:: Das zweite, bewegliche Teil des Dosiermittels, nämlich den Dosierkolben mit Fortsatz;
- Figur 3:: Eine Dosiervorrichtung mit diesem Dosiermittel, in einem Axialschnitt dargestellt, in gestürzter Lage, mit dem Dosierkolben in seiner obersten Stellung im Becher, bereit zur Ausgabe einer Dosierportion;
- Figur 4:: Die Dosiervorrichtung mit diesem Dosiermittel in einem Axialschnitt dargestellt, in gestürzter Lage, mit dem Dosierkolben auf seinem Weg nach unten, bei der Ausgabe der Dosierportion;
- Figur 5:: Die Dosiervorrichtung mit diesem Dosiermittel in einem Axialschnitt dargestellt, in gestürzter Lage, mit dem Dosierkolben in seiner untersten Position, nach Ausgabe der Dosierportion;
- Figur 6:: Die Dosiervorrichtung mit diesem Dosiermittel in einem Axialschnitt dargestellt, in gestürzter Lage, mit dem Dosierkolben in seiner untersten Position, nach Druckentlastung des Behälters und in der Folge aufgrund des Atmosphärendrucks geschwenktem Dosierkolben im Becher;
- Figur 7:: Die Dosiervorrichtung mit diesem Dosiermittel in einem Axialschnitt dargestellt, in gestürzter Lage, mit dem Dosierkolben in seiner obersten Position, nach Belüftung des Behälters und Reduktion der Schwenkung infolge der geometrischen Auslegung der Teile;
- Figur 8:: Eine Ansicht einer Dosiervorrichtung nach diesem Prinzip dosierend, mit einer Dosiereinrichtung für wählbare Dosiermengen, von oben gesehen;
- Figur 9:: Die Dosiervorrichtung nach Figur 8 in einer Ansicht von unten gesehen;
- Figur 10:: Die Dosiervorrichtung nach Figur 8 und 9 von schräg unten gesehen;
- Figur 11:: Die Teile für die Verstellung der Dosierung von der Seite her gesehen, teilweise in einem Schnitt dargestellt;
- Figur 12:: Die Teile für die Verstellung der Dosierung von schräg oben gesehen dargestellt;
- Figur 13:: Die Teile für die Verstellung der Dosierung von schräg unten gesehen dargestellt;
- Figur 14:: Die zusammengebaute Dosiervorrichtung mit Einrichtung zum Einstellen der Dosiermengen in einem Schnitt von der Seite her gesehen dargestellt, bei Einstellung einer minimalen Dosis;
- Figur 15:: Die zusammengebaute Dosiervorrichtung mit Einrichtung zum Einstellen der Dosiermengen in einem Schnitt von der Seite her gesehen dargestellt, bei Einstellung einer maximalen Dosis;
- Figur 16:: Die zusammengebaute Dosiervorrichtung mit Einrichtung zum Einstellen der Dosiermengen in einem Teilschnitt perspektivisch von schräg oben gesehen, bei Einstellung einer minimalen Dosis;
- Figur 17:: Die zusammengebaute Dosiervorrichtung mit Einrichtung zum Einstellen der Dosiermengen in einem Teilschnitt perspektivisch von schräg unten gesehen, bei Einstellung einer minimalen Dosis;
- Figur 18a-c:: Die Dosiervorrichtung zum stufenlosen Verstellen der Dosiermenge, mit Einstellung für eine maximale Dosiermenge in a) von der Seite gesehen, b) in einem Teilschnitt von schräg oben und c) in einem Querschnitt von der Seite her gesehen;
- Figur 19a-c:: Die Dosiervorrichtung zum stufenlosen Verstellen der Dosiermenge, mit Einstellung für eine minimale Dosiermenge in a) von der Seite gesehen, b) in einem Teilschnitt von schräg oben und c) in einem Querschnitt von der Seite her gesehen;
- Figur 20:: Die Dosiervorrichtung in einem diametralen Schnitt in einer Einstellung, bei welcher ein kontinuierlicher Ausfluss ermöglicht ist;
- Figur 21:: Die Dosiervorrichtung von schräg oben gesehen, mit der Einstellung für einen kontinuierlichen Ausfluss;
- Figur 22:: Die Dosiervorrichtung in einem Schnitt längs der Achse der Spindel dargestellt, für die Ausgabe einer kleinstmöglichen Dosis;
- Figur 23:: Die Dosiervorrichtung in einem Schnitt längs der Achse der Spindel dargestellt, für die Ausgabe einer grösstmöglichen Dosis;
- Figur 24:: Die Dosiervorrichtung in einem Schnitt längs der Achse der Spindel dargestellt, für einen kontinuierliche Ausfluss;
- Figur 25:: Eine Detailansicht des unteren Endes des Einsatzes und der darunter ankommenden Nase, kurz vor deren Anschlag.

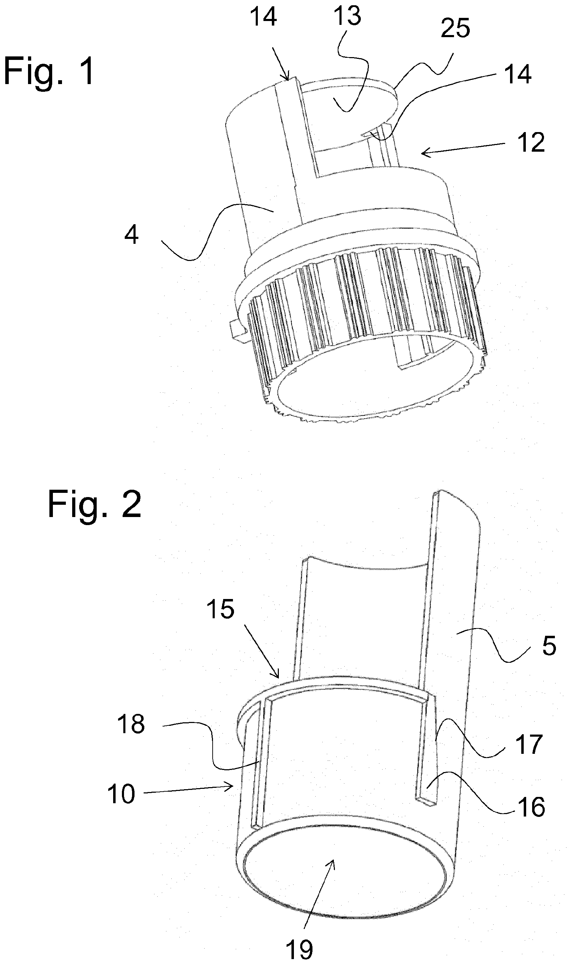

Zunächst soll die generelle und sehr besondere Wirkungsweise der Dosierung aufgezeigt werden, wie sie Gegenstand der WO 2015/150250 A1 ist. Hierzu zeigt die Figur 1 das erste, stationäre Bauteil des Dosiermittels, nämlich den hohlzylindrischen Becher 4 mit seitlichem Fenster 12. Im Wesentlichen handelt es sich bloss um einen Hohlzylinder, der also oben mit einem Deckel 13 geschlossen ist, wobei dieser Deckel 13 im gezeigten Beispiel eben ist, jedoch auch eine von der Ebene abweichende Form aufweisen kann. Sein Fenster 12 ist am oberen Ende in der Umfangswand ausgenommen und erstreckt sich hier um die Hälfte des Umfanges. Der Deckel 13 ist an seinem Rand im äusseren Randbereich, welcher sich längs des oberen Fensterrandes erstreckt, um die Wandstärke der Umfangswand im Radius verkürzt. Sein äusserer, ein wenig nach innen versetzte Rand 25 erstreckt sind dann beidseits etwas weiter als um den halben Umfang, sodass auf beiden Seiten des Fensters 12 Einschnitte 14 im Deckel 13 gebildet sind. An seiner Innenseite sind im Hohlzylinder des Bechers 4 Führungsrippen ausgeformt, die sich in axialer Richtung erstrecken.

In den hohlzylindrischen Becher von Figur 1 ist das zweite, bewegliche Bauteil des Dosiermittels einsteckbar, nämlich ein Dosierkolben 10 mit Fortsatz 5 wie in Figur 2 dargestellt. Dieser Dosierkolben 10 formt gewissermassen einen Stuhl, der mit einer Husse überzogen ist. Im unteren Bereich bildet er einen unten offenen Hohlzylinder 19, und seine Aussenwand erstreckt sich über die obere Abschlussfläche 15 des Hohlzylinders 19 hinaus nach oben und bildet einen Fortsatz 5 in Form eines frei stehenden Segmentes einer Umfangswand. Dieser Fortsatz 5 erstreckt sich hier um den halben Umfang des Hohlzylinders 19 oder Dosierkolbens 10. Er kann sich auch über ein Winkelsegment von 90° bis 200° in axialer Richtung zum Dosierkolben 10 erstrecken. Um beim bildhaften Vergleich mit einem Stuhl zu bleiben, so bildet dieser Fortsatz 5 gewissermassen die Stuhllehne. Aussen am Dosierkolben 10 findet sich auf beiden Seiten eine keilförmige Rippe 16 mit einer Schrägfläche 17, die also leicht schiefwinklig zur Achsenrichtung des Hohlzylinders bzw. Dosierkolbens 10 verläuft. Im gezeigten Beispiel befindet sich ausserdem eine axiale Rippe 18 vorne am Becher, bzw. vorne am von ihm gebildeten "Stuhl".

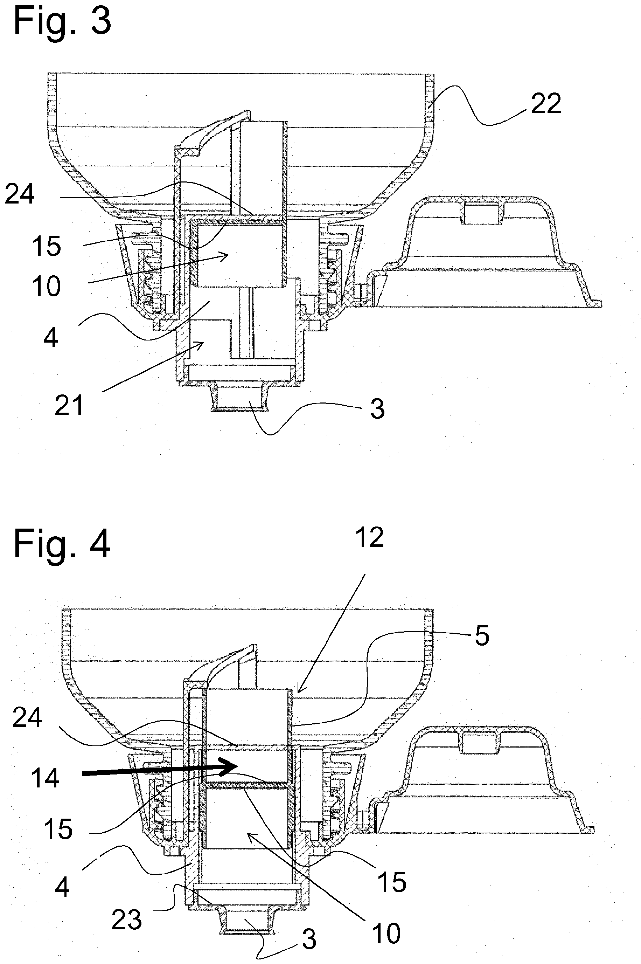

Im Folgenden wird die Funktionsweise der Dosierung Schritt für Schritt beschrieben und erklärt. Die Figur 3 zeigt die Dosiervorrichtung bzw. den Dosierverschluss in einem Axialschnitt, in gestürzter Lage, mit dem Dosierkolben 10 in seiner in dieser Darstellung dann obersten Stellung innerhalb des Bechers 4, bereit zur Ausgabe einer Dosierportion. In dieser Position hat sich der Raum 21 unterhalb des Dosierkolbens 10 mit Flüssigkeit aus dem Behälter 22 gefüllt, mit dem der Dosierverschluss ausgerüstet ist. Sie kann allerdings nicht ausströmen, weil keine oder nur wenig Luft durch den Ausguss 3 von unten einzuströmen vermag. Der fehlende Druckausgleich und auch die Viskosität verhindern ein Eindringen von Luft und somit auch ein Ausströmen von Flüssigkeit durch den Ausguss 3. Der Beginn des Dosierungszyklus wird ab diesem Punkt beschrieben, mit der Lage des Dosierkolbens 10 wie gezeigt. Nun gilt es, diese Dosierportion innerhalb des Dosierkolbens 10 und unterhalb desselben nach aussen auszugiessen. Dazu muss im Innern des Behälters 22 oder im Falle eines Schlauches im Innern des Schlauches ein höherer Druck erzeugt werden als jener, der ausserhalb des Behälters, Schlauches und Verschlusses herrscht, also ein höherer Druck als Atmosphärendruck. Das geschieht, indem der Behälter 22 mit einer Hand oder beiden Händen zusammengedrückt und somit leicht gequetscht wird. Im Falle eines Schlauches für die Flüssigkeitszuführung kann das bewerkstelligt werden, indem in den Schlauch in seinem Endbereich vor dem Dosierverschluss ein Schlauchventil eingebaut wird, und dieses in einen elastischen komprimierbaren Balg mündet, welcher dann in einen Stutzen mündet und welcher Stutzen schliesslich mit der Dosiervorrichtung ausgerüstet ist. Je stärker der Behälter oder der Balg bei geschlossenem Schlauchventil gequetscht wird, umso rascher erfolgt dann das Ausgeben der Dosiermenge, die in einer typischen Dimensionierung der Dosiervorrichtung ein Volumen von 2 ml bis 90ml aufweist. Selbstverständlich lässt sich durch eine andere Bemessung beziehungsweise Vergrösserung oder Verkleinerung des Eintrittsloches 12 am Steuerkammerbegrenzer 31 in die Steuerkammer die Dosiermenge grösser oder kleiner gestalten. Die Flüssigkeit wird durch den Hauptkanal neben der Dosier-Steuerkammer ausgegossen, bis die Steuerkammer voll ist und das Ausgiessloch verschlossen wird.

Der flüssige Inhalt des Behälters 22 drückt beim Quetschen des Behälters oder Balges von oben auf den Deckel 15, also sinngemäss auf die Stuhl-Sitzfläche des sinngemässen Stuhls, den der Dosierkolben 10 bildet. Unterhalb des Deckels 15 herrscht ein geringerer Druck als oberhalb der Dosiereinrichtung, weil der Hauptkanal neben der Dosier-Steuerkammer einen Flaschenhals bildet. Somit verschiebt sich der Dosierkolben 10 im Innern des Bechers 4 wie in Figur 4 gezeigt nach unten und drückt die unten eingeschlossene Dosierportion der Flüssigkeit durch den Ausguss 3 nach aussen. Der Raum oberhalb des Deckels 15 bildet eine Dosier-Steuerkammer 14, die im Zustand wie in Figur 3 gezeigt zunächst kein Volumen einschliesst, wobei aber das Volumen durch das nach unten Bewegen des Dosierkolbens 10 laufend wächst und in der untersten Position des Dosierkolbens 10 schliesslich ein Maximum erreicht. Der Raum der Dosier-Steuerkammer 14 wird durch insgesamt vier Wände begrenzt, nämlich von zwei stationären und zwei verschiebbaren Wänden. Es sind nämlich zwei zueinander parallel verlaufende, in Axialrichtung zum Stutzen verlaufende Seitenwände vorhanden, von denen die eine gegenüber der anderen verschiebbar ist. Die eine Wand ist stationär, nämlich die Umfangswand des Bechers 4, während die verschiebbare Seitenwand vom Fortsatz 5 gebildet wird. Dazu kommen zwei weitere Begrenzungswände, nämlich der Boden 24 des Bechers als stationäre Begrenzungswand und der Deckel 15 des Dosierkolbens bzw. die Sitzfläche des sinngemässen Stuhls als verschiebbare Begrenzungswand. Der Boden 24 bzw. die Bodenwand steht in einem Winkel von der Wand des Bechers 4 ab, und der Deckel 15 steht hier in einem rechten Winkel vom Fortsatz 5 ab. Das von allen vier Wänden 15, 5, 4, 24 umschlossene variable Volumen bildet die Dosier-Steuerkammer 14. Beim Quetschen des Behälters wird der Dosierkolben nach unten geschoben und das Volumen der Dosier-Steuerkammer vergrössert sich und wird gleichzeitig von oben gefüllt. Die Dosiervorrichtung ist in Figur 4 wiederum in einem Axialschnitt dargestellt, mit dem Dosierkolben 10 auf seinem Weg im Innern des Bechers 4 nach unten, bei der Ausgabe der Dosierportion. In der dargestellten Position hat der Dosierkolben 10 etwa ein Fünftel seines Weges nach unten zurückgelegt. Der halbkreisförmige Fortsatz 5 am Dosierkolben 10 schmiegt sich innerhalb des Fensters bzw. das Eintrittsloch12 an die Innenwand des Bechers 4 an und verschliesst den Zwischenraum annähernd flüssigkeitsdicht. Dieses Niederdrücken des Dosierkolbens 10 aufgrund des oben höheren Druckes als auf seiner Unterseite setzt sich fort, bis der Dosierkolben 10 unten am Innenrand 23 des Ausgusses 3 einen Anschlag findet.

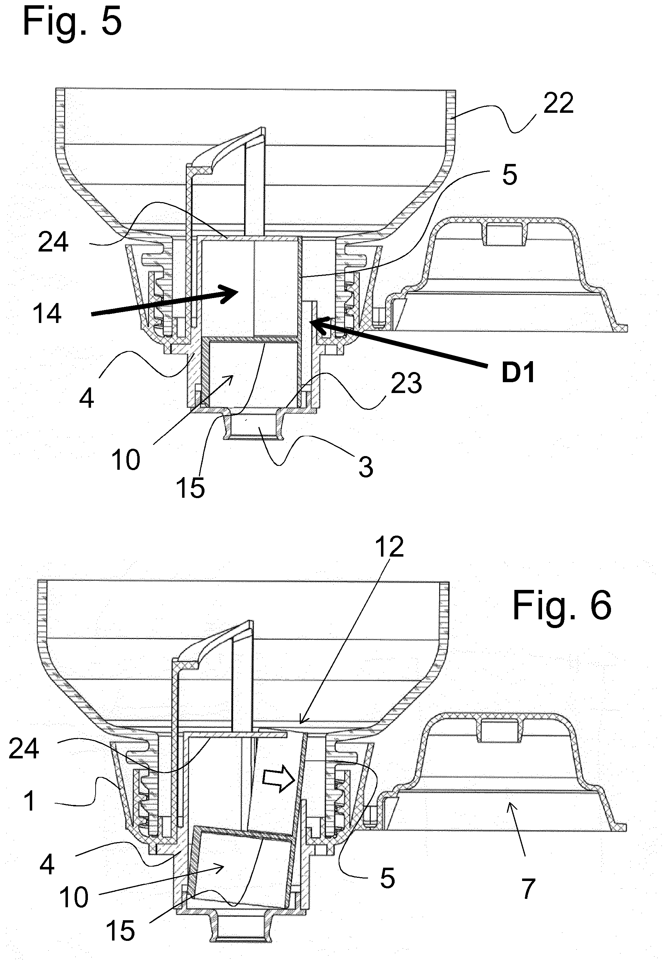

Die unterste Endposition des Dosierkolbens 10 ist in Figur 5 dargestellt. Sie zeigt die Dosiervorrichtung bzw. den Dosierverschluss in einem Axialschnitt, mit dem Dosierkolben 10 in seiner untersten Position, nach Ausgabe der Dosierportion. Bis kurz vor Erreichen dieser Position floss auch Flüssigkeit aus dem Behälter hinter dem Fortsatz 5, also sinngemäss hinter der Stuhllehne, vom Behälter durch den Raum dahinter nach unten. Die hierzu wichtige Distanz zwischen der Rückseite des Fortsatzes 5 bzw. der sinngemässen Stuhllehne zur Innenwand des hohlzylindrischen Bechers 4 ist hier mit D1 eingezeichnet. In der gezeigten Position ist der Verschluss dichtend verschlossen, indem der untere Rand des Dosierkolbens dichtend auf dem Rand 23 im Innern des Ausgusses 3 aufliegt und ihn verschliesst. Die Dosierung wird letztlich durch das gleichzeitige Ausströmen der Flüssigkeit während des gleichzeitigen Befüllens der Dosier-Steuerkammer 14 erzeugt, und das dosierte Ausgiessen wird am Schluss durch Verschliessen durch einen Teil der Dosier-Steuerkammer 14 gestoppt. Damit das Ausgiessen einer Dosis Flüssigkeit erfolgt, muss die durch die Abwärtsbewegung des Dosierkolbens 10 im Volumen wachsende Dosier-Steuerkammer 64 von leer auf voll gefüllt werden. Im Gleichschritt dazu wird die Dosis durch den Ausguss 3 ausgegeben.

Jetzt gilt es, eine neue Portion der Flüssigkeit zum dosierten Ausgeben vorzubereiten bzw. in die Dosierkammer des Dosierkolbens 10 aus der Flüssigkeitszuführung zu laden. Zum Ausgeben der Dosis wurde ja der Behälter zusammengedrückt, oder im Falle eines Zufuhrschlauches dessen eingebauter Balg zusammengedrückt, bis der Dosierkolben 10 nach ganz nach unten gedrückt wurde und hernach den Behälter dichtend verschloss. Wenn man nun den Behälter 22 oder Balg wieder loslässt, so formt er sich elastisch zurück und erzeugt damit einen Unterdruck gegenüber dem aussen herrschenden Atmosphärendruck. In der Folge gibt es einen Drucküberschuss, welcher auf die Unterseite des Deckels 15 bzw. auf die sinngemässe Unterseite der Sitzfläche des Stuhls wirkt, welcher vom Dosierkolben 10 geformt wird. Weil nun aber der Dosierkolben 10 im Innern des Bechers 4 mit Absicht mit ein wenig Spiel sitzt, gibt er sofort in jener Richtung nach, wo kein Widerstand vorhanden ist, und das ist in Schwenkrichtung der sinngemässen Stuhllehne nach hinten.

Also neigt sich der Fortsatz 5 wie mit dem Pfeil in Figur 6 eingezeichnet leicht nach aussen. Diese Bewegung bzw. seitliche Neigung des Dosierkolbens 10 bewirkt, dass er zusammen mit dem Becher 4 als Ventil wirkt. Er nimmt also nicht nur eine reine Funktion als Kolben und Variierer des Dosier-Steuerkammer-Volumens wahr, sondern auch eine Ventilfunktion. Durch die entstehenden Spalten infolge des bewusst gewählten Spiels und durch deren Verbreiterung infolge der Neigung des Dosierkolbens 10 im hohlzylindrischen Becher 4 kann Luft von unten durch diese Spalten nach oben in das Innere des Behälters 22 oder Balges strömen und ihn belüften. Im gleichen Volumen fliesst Flüssigkeit aus dem Behälter 22 oder im Falle eines Schlauches aus seinem elastischen Balg durch die Spalten zwischen Becher 4 und Dosierkolben 10 nach unten in die Dosierkammer. Diese Anfangsposition für das Füllen der Dosierkammer ist in Figur 6 gezeigt. Sie zeigt den Dosierverschluss in einem Axialschnitt, mit dem Dosierkolben 10 in seiner untersten Position, nach Druckentlastung des Behälters 22 und in der Folge mit dem aufgrund des Atmosphärendrucks geschwenkten Dosierkolben 10 im Innern des Bechers 4. Bei anhaltender und herrschender Druckdifferenz bewegt sich nun aber der Dosierkolben 10 im hohlzylindrischen Becher 4 aus dieser Position nach oben, weil ja der herrschende Atmosphärendruck unterhalb seines Deckels 15 grösser ist als der aufgrund der elastischen Rückbildung des Behälters 22 bzw. Balges in dessen Innerem und somit oberhalb des Deckels 15 herrschende Druck. Die Aufwärtsbewegung des Dosierkolbens 10 setzt sich fort, bis er mit seiner Deckelfläche 15 innen am Boden 24 des hohlzylindrischen Bechers 4 anschlägt. Sein Fortsatz 5 hat sich dabei über und durch das Fenster bzw. Eintrittsloch 12 am Becher 4 nach oben verschoben und überragt nun den Becher 4 in das Behälterinnere, oder im Falle eines Schlauches ragt er in den Schlauchstutzen hinein.

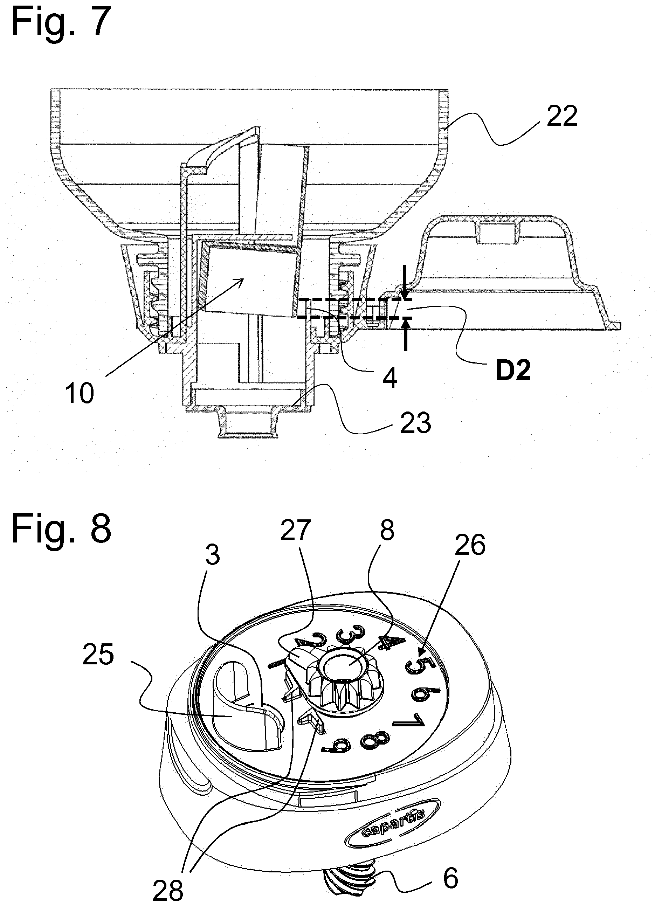

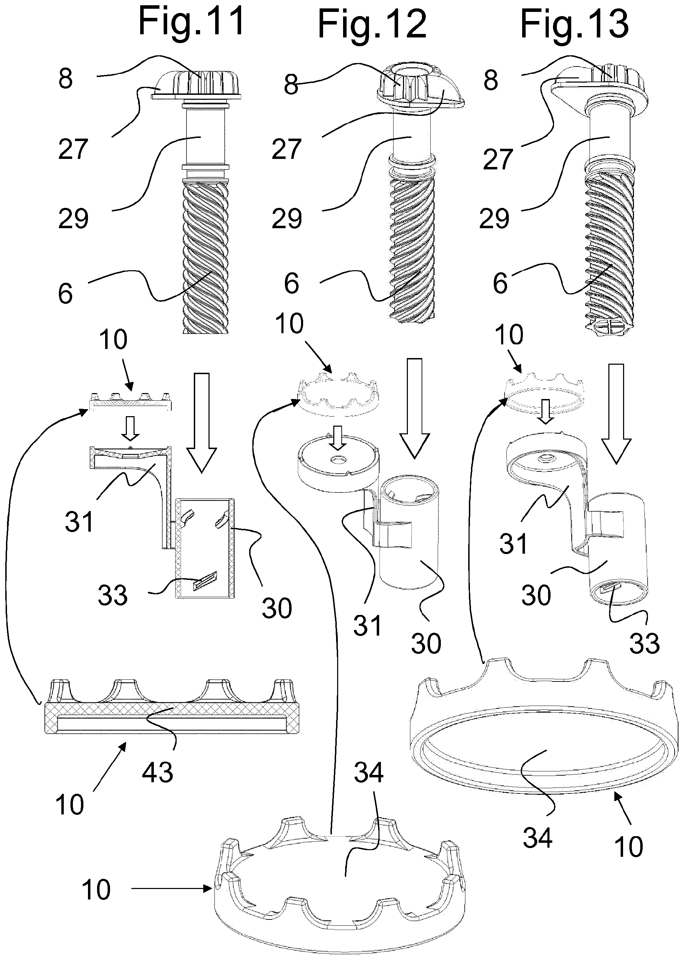

Die schliesslich eingenommene Endposition ist in Figur 7 gezeigt. Sie zeigt die Dosiervorrichtung oder den Dosierverschluss in einem Axialschnitt, mit dem Dosierkolben 10 in seiner obersten Position, nach Belüftung des Behälters 22 oder Schlauchbalges. Im Verlauf der Aufwärtsbewegung des Dosierkolbens 10 wurde dessen Neigung gegenüber der Behälterachse kontinuierlich reduziert. Die Neigung des Dosierkolbens 10 ist also in dieser Endposition gegenüber der anfänglichen Neigung kleiner. In der hier gezeigten Endposition gibt es eine Überlappung der Höhe des unteren Randes des Dosierkolbens 10 auf der Seite seines Fortsatzes 5 mit dem oberen Rand des hohlzylindrischen Bechers 3 um eine gewisse Distanz, welche hier in Figur 11 mit D2 eingezeichnet ist. Damit die Neigung des Dosierkolbens 10 im oberen Bereich seines Weges reduziert wird und schliesslich in der Endposition eingeschränkt ist, sodass sich die gezeigte Endposition einstellt, sind Rippen 18,17 auf mindestens einer Aussenseite des Dosierkolbens 10 angebracht, die in Figur 5 sichtbar sind, und welche als Führungen wirken. Während der gesamten Aufwärtsbewegung des Dosierkolbens 10 konnte im Gegenzug zur Belüftung des Behälterinhaltes Flüssigkeit aus demselben durch die Spalten rund um den Dosierkolben 10 in den Bereich unterhalb desselben rinnen und diesen Raum füllen. Sobald nun erneut auf die Aussenwände des Behälters 22 oder des Balges gedrückt wird, erhöht sich dessen Innendruck wiederum über den Atmosphärendruck hinaus. Erneut wirkt jetzt der Dosierkolben 10 als Ventil und verschliesst die Spalten, durch welche zuvor die Flüssigkeit aus dem Behälter 22 oder Balg in den Dosierraum rinnen konnte. Derselbe Effekt findet statt, wenn die Dosiereinrichtung nach oben geschwenkt wird. Zum Beispiel durch Aufstellen einer Flasche, an der die Dosiereinrichtung montiert ist. Der Effekt wird in diesem Falle von der Schwerkraft an Stelle des Unterdruckes verursacht.

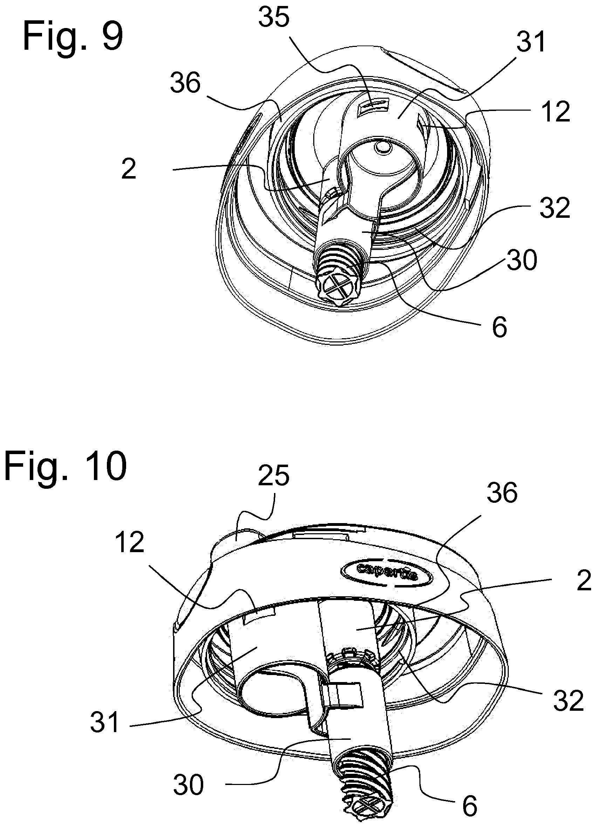

Zusammengefasst wird also, ausgehend aus der untersten Position des Dosierkolbens 10 und bei zusammengequetschtem Behälter 22 oder Balg wie in Figur 9 gezeigt der Dosierkolben 10 zuerst durch Entlasten von Behälter oder Balg und damit Erzeugen eines Unterdruckes gegenüber der Atmosphäre zum Wegschwenken in die Position nach Figur 6 gezwungen und hernach zum Aufsteigen, weil unterhalb desselben ein höherer Druck wirkt als oberhalb. Während dieser Bewegung rinnt Flüssigkeit durch die entstandenen Spalten in die Dosierkammer, wird aber in derselben aufgrund der Druckverhältnisse gehalten. Sobald der Dosierkolben 10 mit seinem Deckel 15 oben am Becher anschlägt, wie in Figur 7 dargestellt, ist die Dosierkammer maximal gefüllt. Jetzt kann wieder Druck im Behälter 22 oder Balg aufgebaut werden, durch Zusammenquetschen. Das führt zum Ausrichten des Dosierkolbens 10 auf die Achse des Bechers 4 und hernach zum Niederfahren des Dosierkolbens 10 und zur Ausgabe der zuvor unterhalb seines Deckels 15 gefangenen Flüssigkeitsportion.

Die bisher vorgestellten Bauteile können auch anders geformt und dimensioniert sein, und jedes Bauteil kann bedarfsweise auch aus mehreren Teilen zusammengesetzt sein, wenngleich gerade ein Vorteil dieser Dosiervorrichtung, auch in ihrer Ausführung als Dosierverschluss, die Tatsache ist, dass sie sich aus bloss diesen beiden Bauteilen, nämlich aus dem Becher 4 und dem Dosierkolben 10 herstellen lässt.

Im Kern geht es bei der im Folgenden vorgestellten besonderen Ausführung aber einzig um die Art und Weise, wie an einer solchen Dosiervorrichtung wie oben beschrieben und erläutert die Dosiermenge verstellbar ist. Hierzu zeigt die Figur 8 zunächst den Blick von oben auf eine Dosiervorrichtung, die nach diesem Prinzip dosiert, aber mit einer besonderen Dosiereinrichtung für wählbare Dosiermengen. Man erkennt den Ausguss 3 mit seinem Schnabel 25. Etwa im Zentrum der Dosiervorrichtung, die als Deckel auf einen Behälterstutzen aufschraubbar oder aufprellbar ist, erkennt man einen hohlen Drehknopf 8, der oben auf einer hohlen Spindel 6 angeformt ist, die man hier unten aus der Dosiervorrichtung herausragend erkennt. An der Peripherie um den Drehknopf 8 herum ist eine Zahlenskala 26 abgebildet, die hier von 1 bis 9 geht. Am Drehknopf 8 ist ein Zeiger 27 angeformt, der hier auf die Nummer 1 zeigt. Der Drehknopf 8 kann aus der gezeigten Position im Uhrzeigersinn bis zur Ziffer 9 gedreht werden, womit die Spindel 6, auf deren oberem Ende er sitzt, entsprechend verdreht wird. Die Anschläge 28 wirken als Begrenzer für den Zeiger 27.

Die Figur 9 zeigt diese Dosiervorrichtung nach Figur 8 in einer Ansicht von unten gesehen. Wie man hier erkennt, sitzt die Spindel 6 in einer gewindelosen Fassung 2, in welcher sie drehbar gelagert ist. Weiter unten steckt die Spindel 6 in einer Verstellmuffe 30 mit Innengewinde. Aussen an dieser Verstellmuffe 30 ist ein Rohr angeformt, welches für die Bildung der Steuerkammer dieselbe umfasst, also ein Steuerkammer-Begrenzer 31 ist. Weiter erkennt man in diesem Steuerkammer-Rohr 31 seitliche Fenster 35. Und schliesslich ist die Muffe 36 mit ihrem Innengewinde 32 gezeigt, mittels dessen die Dosiervorrichtung mit dieser Muffe 36 auf den Gewindestutzen eines Behälters oder einer Flasche aufschraubbar ist.

Die Figur 10 zeigt diese Dosiervorrichtung von schräg unten gesehen aus einer anderen Perspektive, mit allen bereits oben beschriebenen Teilen, mit zusätzlich dem Schnabel 25 zum Ausguss. In den Figuren 11 bis 13 ist die Spindel 6 mit ihrem Drehknopf 8 und Zeiger 27 gezeigt, und darunter jeweils die mit der Spindel 6 zusammenwirkenden Teile in drei Ansichten, nämlich in Figur 11 bis unten an den Seitenrand von der Seite her gesehen, wobei die Teile in einem Schnitt dargestellt sind, dann in Figur 12 bis unten an den Seitenrand alle Teile in einer Ansicht von schräg oben gesehen und schliesslich in Figur 13 bis unten an den Seitenrand in einer Ansicht von schräg unten dargestellt. Die Spindel 6 weist einen blanken Abschnitt 29 auf, mit welchem sie in einer Fassung 2 wie in Figuren 9 und 10 gezeigt drehbar gelagert und gehalten werden kann. Die Spindel 6 steckt mit ihrem steilen Gewinde in einer Verstellmuffe 30, an deren Innenwand einige Gewindeabschnitte 33 angeformt sind, die beim Einschrauben der Spindel 6 in diese Verstellmuffe 30 in das Spindelgewinde eingreifen. Aussen an der Verstellmuffe 30 ist ein Steuerkammer-Begrenzer 31 angeformt, über dem der Dosierkolben 10 angeordnet ist. Dieser hat hier die Form einer Krone, die aber unterhalb der Kronenzacken eine durchgehende Scheibe 34 aufweist, was in den vergrösserten Darstellungen ganz unten eingezeichnet ist. Dieser Dosierkolben 10 wirkt in gleicher Weise wie der eingangs bereits beschriebene.

In Figur 14 ist diese Dosiervorrichtung in zusammengebautem Zustand mit der Einrichtung zum Einstellen der Dosiermengen in einem Schnitt von der Seite her gesehen dargestellt, bei Einstellung einer minimalen Dosis. Wie man erkennt, ist die Spindel 6 soweit verdreht worden, dass die Verstellmuffe 30 an ihre oberste Position verschoben wurde und mit ihr der Steuerkammer-Begrenzer 31. In Figur 15 dann ist die zusammengebaute Dosiervorrichtung mit Einrichtung zum Einstellen der Dosiermengen in einem Schnitt von der Seite her gesehen dargestellt, bei Einstellung einer maximalen Dosis.

Die Figur 16 zeigt die zusammengebaute Dosiervorrichtung mit Einrichtung zum Einstellen der Dosiermengen nochmals in einem Teilschnitt perspektivisch von schräg oben gesehen. Hier ist die minimale Dosis eingestellt, indem sich die Verstellmuffe 30 in ihrer obersten Position befindet, ganz nahe an der Fassung 2 für die Spindel 6. Entsprechend begrenzt ist der Weg des Dosierkolbens 10 in der Dosier-Steuerkammer 14. Die Figur 17 zeigt das Gleiche in einer anderen Perspektive, nämlich von schräg unten gesehen.

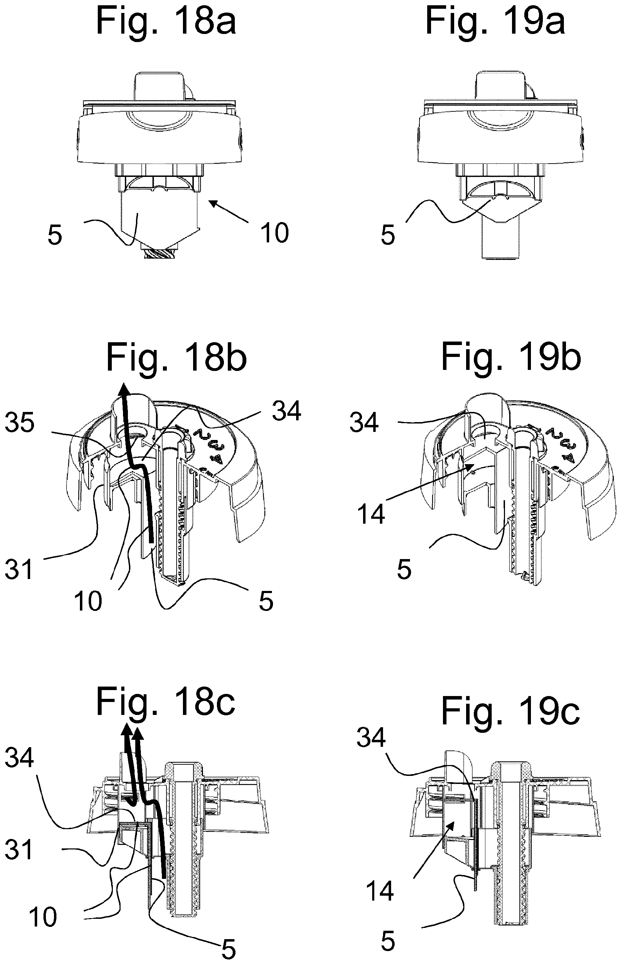

Die Figur 18a-c zeigt die Dosiervorrichtung mit einem Dosierkolben 10, der eine Begrenzungswand 5 aufweist, die in einer zur Dosiervorrichtung axial verlaufenden Ebene liegt, sowie eine dazu rechtwinklig abgewinkelte Begrenzungswand, die eine halbe Kreisscheibe 34 bildet. Die Funktion dieses Dosierkolbens wurde eingangs ausführlich beschrieben. Mit dem hier gezeigten Mechanismus zur Verstellung der Dosiermengen wird im Wesentlichen der Verschiebeweg des Dosierkolbens 10 verändert, indem sein Weg nach unten begrenzt wird, was durch die Verdrehung der Spindel 6 gelingt, und somit der Höhenverstellung des Steuerkammer-Begrenzers 31. In den Figuren 18a-c ist der Dosierkolben 10 in seiner Position gezeigt, in welcher er ganz unten am Steuerkammer-Begrenzer 31 mit seiner halben Kreisscheibe 34 anschlägt. Bei gestürztem Behälter und gestürzter Dosiervorrichtung gelangt Luft durch die Belüftungseinrichtung und sorgt für den Druckausgleich im Inneren des Behälters und es beginnt das Ausgiessen aus dieser Position des Dosierkolbens 10, die längs der eingezeichneten Pfeile ausströmt. Flüssigkeit aus dem Behälter kann erstens aussen längs der axialen Wand 5 des Dosierkolbens 10 entlangströmen, sowie auch durch die Fenster 35 und dann durch den Ausguss 3 nach aussen, bis die halbe Kreisscheibe 34 die Fenster 35 überstrichen hat und sich der Raum unterhalb bzw. in gestürzter Lage der Dosiervorrichtung dann entsprechend oberhalb der Kreisscheibe 34 des Dosierkolbens 10 gefüllt hat. Während des Ausgiessens einer bestimmten Dosis wird also die Dosier-Steuerkammer 14 gefüllt, und sobald sie voll ist, verschliesst die Kreisscheibe 34 den Ausguss 3. Mit der Spindel 6 wird also die Ausgangslage der Kreisscheibe 34 des Dosierkolbens 10 verstellt und entsprechend das Füllvolumen der Steuerkammer 14, die sich während des Ausgiessens einer Dosis als Besonderheit füllt und nicht etwa entleert.

Es versteht sich, dass die Zahlenskalierung 26 auf der Dosiervorrichtung auch geeicht werden kann, sodass zum Beispiel auf einer Skala von 1 bis 9 jeweils entsprechend viele 10-Milliliter Einheiten Flüssigkeit ausgegossen werden. Es ist klar, dass die zu den Zahlen gehörenden Dosismengen frei wählbar sind, je nach Ausführung und Dimensionierung der Dosiervorrichtung. An Stelle der Zahlen können auch beliebige Symbole oder Markierungen verwendet werden.

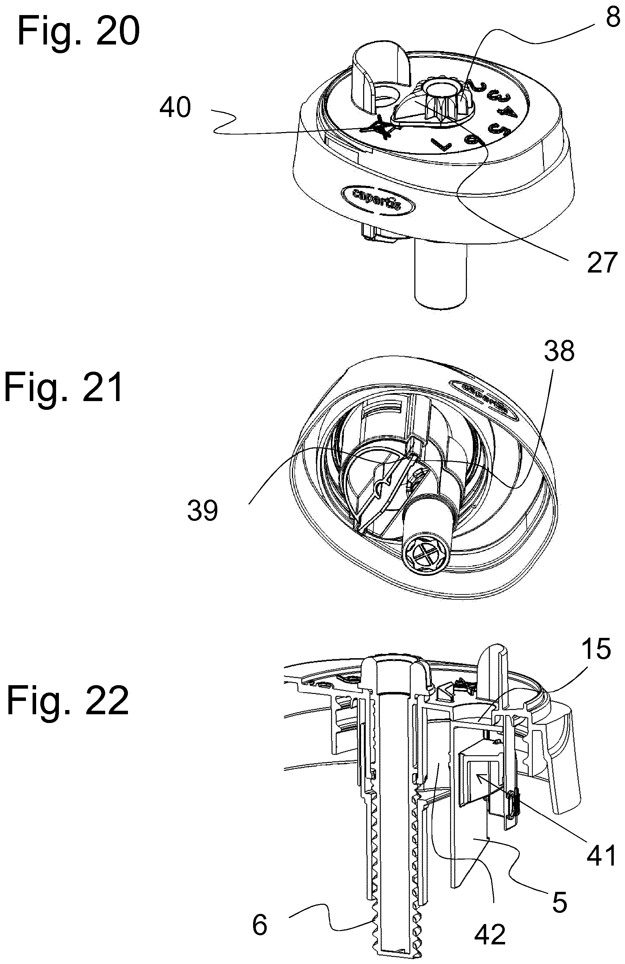

Im Folgenden wird eine besondere Ausführung der Dosiervorrichtung vorgestellt, die auch ein kontinuierliches Ausströmen ermöglicht. Hierzu ist auch eine spezielle Markierung oben auf der Dosiervorrichtung angebracht. In Figur 20 ist diese Spezialausführung von schräg oben gesehen gezeigt. Der Drehknopf 8 ist hierzu in eine spezielle Position gedreht, wo sein Zeiger 27 auf eine Markierung 40 zeigt, welche das kontinuierliche Ausgiessen andeutet - bzw. bei welcher nicht dosiert wird, hier in Form eines Dosierbechers, der mit einem Kreuz durchgestrichen ist.

Die Figur 21 zeigt die Dosiervorrichtung in dieser Einstellung für ein kontinuierliches Ausgiessen in einer Ansicht von schräg unten gesehen. Im Grundsatz wird das kontinuierliche Ausströmen dadurch realisiert, dass der Fortsatz 5 und sein rechtwinklig zu ihm verlaufender Deckel 15 durch eine aktivierbare Wegbegrenzung das Ausgiessloch nicht mehr erreichen kann, sodass der Deckel 15 das Ausgiessloch nicht mehr verschliessen kann und es also offen hält. Hierzu sind im gezeigten Beispiel dieser Ausführung auf beiden Seiten des Fortsatzes 5 Nasen 38 angeformt, die beim Aufwärtsbewegen des Fortsatzes 5 an einem speziellen höhenverstellbaren Einsatz, der in weiteren Darstellungen sichtbar ist, einen Anschlag finden. Damit kann sich der Fortsatz 5 nicht soweit nach oben verschieben, dass er den Ausfluss verschliesst. Im Ergebnis ist damit ein kontinuierlicher Ausfluss ermöglicht.

Wie das genau realisiert ist erschliesst sich anhand der Figuren 22 bis 25. Die Figur 22 zeigt die Dosiervorrichtung hierzu in einem Schnitt längs der Achse der Spindel 6. Auf der Spindel sitzt eine Fassung 42 mit Innengewinde, die verdrehsicher im Innern des Dosierverschlusses geführt ist. Wenn die Spindel 6 gedreht wird, was durch die Drehung des Drehknopfs 8 ausgelöst wird, so wird damit die Fassung 42 auf- und abwärts verschoben. Die Fassung 42 ist mit dem Einsatz 41 verbunden, sodass auch dieser sich entsprechend zusammen mit der Fassung 42 auf- und abwärts bewegt. Der Fortsatz 5 mit seinen seitlichen Nasen 38 findet bei seiner Aufwärtsbewegung bzw. beim Ausgiessen bei seiner Abwärtsbewegung am Einsatz 41 je nach Einstellung einen Anschlag und stoppt und begrenzt damit die Bewegung des Fortsatzes 5. In der gezeigten Abbildung ist eine minimale auszugebende Dosis eingestellt. Der Fortsatz 5 kann sich ab der hier gezeigten Ausgangslage während des Ausgiessens, also mit gestürzter Dosiervorrichtung, nach unten zum Ausgussloch hin bewegen. Während dieser Bewegung des Fortsatzes 5 und des an ihm rechtwinklig abstehenden Deckels 15 strömt laufend Flüssigkeit um den Fortsatz 5 und oberhalb des Deckels 15 zum Ausgussloch und nach draussen, bis der Deckel 15 am Fortsatz 5 das Ausgussloch erreicht und es verschliesst. Damit ist die Dosierung abgeschlossen. Für die Ausgabe einer neuen Dosis muss die Dosiervorrichtung in eine aufrechte Lage geschwenkt und abermals gekippt werden.

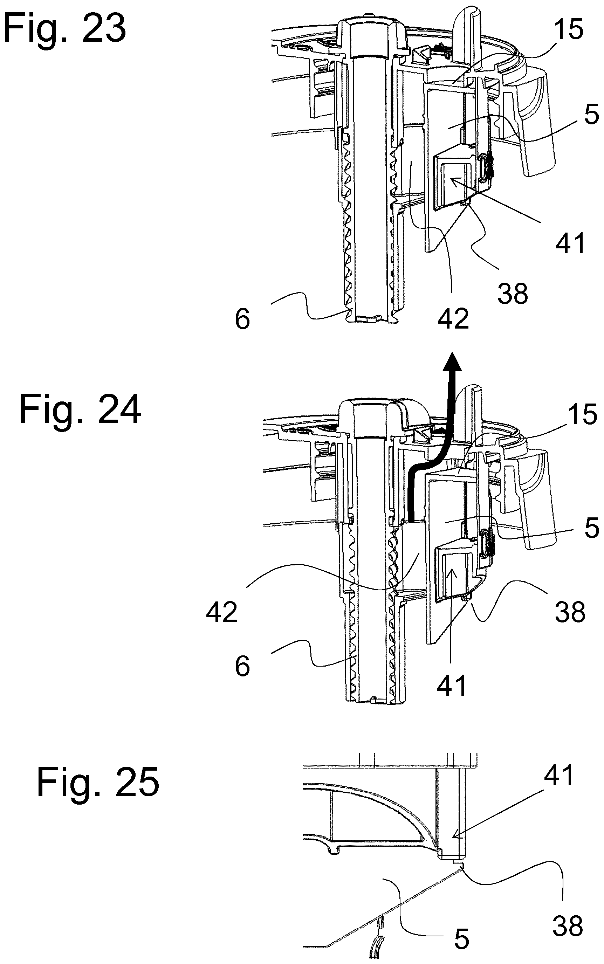

Die Figur 23 zeigt die gleiche Ansicht der Dosiervorrichtung, jetzt aber mit einer Einstellung für eine grösstmögliche auszugebende Dosis. Der Einsatz wurde durch Verdrehung des Drehknopfes 8 und damit der Spindel 6 soweit nach unten verschoben, dass ein grösserer Weg des Fortsatzes 5 und seines Deckels 15 ermöglicht ist, im Vergleich zur Einstellung gemäss Figur 22. Während des Ausgiessens, also bei gekippter Dosiervorrichtung, bewegt sich der Fortsatz 5 und Deckel 15 wiederum gegen das Ausgussloch hin, während dessen Flüssigkeit laufend ausströmt, bis der Deckel 15 am Ausgussloch anliegt und es verschliesst. Die Dosierung ist damit beendet. Für die Ausgabe einer neuen Dosis muss die Dosiervorrichtung in eine aufrechte Lage geschwenkt und abermals gekippt werden.

Schliesslich zeigt die Figur 24 eine dritte Einstellung, nämlich für ein kontinuierliches Ausgiessen. Der Weg der Flüssigkeit ist mit einem dicken Pfeil eingezeichnet. Sie umströmt den Fortsatz 5 und seinen rechtwinklig von ihm abstehenden Deckel 15 und gelangt durch das Ausgussloch nach draussen. Das Ausgiessen kann deswegen kontinuierlich erfolgen, weil in dieser Einstellung die Bewegung des Fortsatzes 5 und Deckels 15 gegen das Ausgussloch hin begrenzt ist. Hierzu wurde die Spindel 6 beim Verdrehen des Drehknopfes 8 auf die Stellung für das kontinuierliche Ausgiessen - wie in Figur 20 dargestellt - soweit verdreht, dass die Fassung 42 und der mit ihr verbundene Einsatz 41 soweit nach unten verschoben ist, dass der Fortsatz 5 mit seinen beiden seitlichen Nasen 38 an diesem Einsatz 41 frühzeitig einen Anschlag findet und sich nicht weiter zum Ausgussloch hin verschieben kann. Es bleibt daher stets ein Weg für die ausströmende Flüssigkeit frei. Mit anderen Worten: Es wird dem Deckel 15 infolge dieses Zurückhaltens des Fortsatzes 5 durch Anschlagen seiner Nasen 38 am Einsatz 41 nicht mehr erlaubt, sich soweit zum Ausgiessloch hin zu bewegen, bis er dieses verschliesst. Damit wird das Ausgussloch permanent offengelassen. Flüssigkeit kann daher kontinuierlich ausströmen.

Schliesslich zeigt die Figur 25 das Detail, wie eine der beiden Nasen 38 am Einsatz 41 einen Anschlag findet. Der Fortsatz 5 bewegt sich beim Ausgiessen in Richtung zum Einsatz 41 hin und wie man hier sieht fehlt in der Zeichnung kaum mehr 1mm bis die Nase 38 am Einsatz 41 anschlägt und die Bewegung des Fortsatzes 5 und des Deckels 15 gestoppt wird. Der Fortsatz 5 mit seinem Deckel 15 stoppt dann in einer Position, in welcher der Deckel 15 das Ausgiessloch noch offenhält, sodass Flüssigkeit kontinuierlich ausströmen kann.

### Ziffernverzeichnis

- 1: Vorrichtungskörper
- 2: Spindelfassung
- 3: Ausguss
- 4: hohlzylindrischer Becher
- 5: Fortsatz auf Dosierkolben
- 6: Spindel
- 7: Schliesskappe
- 8: Drehknopf für die Spindel 6
- 9: Verstell-Element
- 10: Dosierkolben
- 11: ebener Fortsatz auf Dosierkolben
- 12: Fenster in hohlzylindrischem Becher, Eintrittsloch
- 13: Deckel am Becher
- 14: Steuerkammer
- 15: Deckel am hohlzylindrischen Dosierkolben 10
- 16: seitliche Rippe am Dosierkolben
- 17: Schrägfläche an Rippe 16
- 18: Rippe vorne an stuhlförmigem Dosierkolben
- 19: Stuhlsitzfläche
- 20: Stuhllehne
- 21: Raum 21 unterhalb des Dosierkolbens 10
- 22: Behälter, Flasche
- 23: Innenrand des Ausgusses 3
- 24: Nocken als Verstellwegbegrenzer
- 25: Schnabel an Ausguss 3
- 26: Zahlenskala
- 27: Zeiger
- 28: Anschläge für den Zeiger 27
- 29: blanker Abschnitt an Spindel
- 30: Verstellmuffe
- 31: Steuerkammer-Begrenzer
- 32: Innengewinde für das Aussengewinde eines Behälterstutzens
- 33: Gewindeabschnitte an Verstellmuffe
- 34: Kreisscheibe
- 35: Fenster in Steuerkammer-Begrenzer
- 36: Muffe mit Innengewinde 32 für Stutzen des Behälters
- 37: Füllloch am Steuerkammer Begrenzer
- 38: Nase für kontinuierlichen Ausfluss
- 39: Anschlag für Nase
- 40: Markierung kontinuierlicher Ausfluss für Zeiger des Drehknopfs
- 41: Einsatz
- 42: Fassung für Einsatz

## Patentansprüche

1. Dosiervorrichtung für einen Stutzen zum Ausgiessen von definierten Dosen aus einem Behälter oder Schlauch, bestehend aus einem auf den Stutzen aufschraub- oder aufprellbaren, wahlweise mit separatem Deckel verschliessbaren Ausguss-Aufsatz mit einer Dosier-Steuerkammer (14) mit variablem Volumen, die beim Ausgiessen von leer zu voll befüllt wird, wobei diese Dosier-Steuerkammer (14) vom Raum zwischen einem Steuerkammer-Begrenzer (31) und dem Innern eines Dosierkolbens (10) gebildet wird, wobei sich die Dosier-Steuerkammer (14) beim Ausgiessen einer Dosis füllt, und wobei der Dosierkolben (10) bei voller Steuerkammer (14) den Ausguss (3) verschliesst, ***dadurch gekennzeichnet,* dass** der Steuerkammer-Begrenzer (31) in seiner Lage axial verschiebbar ist, dass die auszugiessende Dosismengen durch den Steuerkammer-Begrenzer (31) einstellbar sind, indem der Weg des Dosierkolbens (10) auf seiner dem Behälter oder Schlauch zugewandten Seite begrenzbar ist, indem in der Dosiervorrichtung in einer axialen Spindelfassung (2) eine Spindel (6) drehbar gelagert ist, die oben einen Drehknopf (8) aufweist, der vorne dichtend aus der Dosiervorrichtung ragt, und dass die Spindel (6) mit ihrem Gewinde mit ihrem Endbereich in die Gewindeabschnitte (33) im Innern einer Verstellmuffe (30) eingreift und die Verstellmuffe (30) aussen mit dem Steuerkammer-Begrenzer (31) verbunden ist, sodass bei Drehung der Spindel (6) der Steuerkammer-Begrenzer (31) in seiner Lage axial verschiebbar und somit die Lage des Dosierkolbens (10) für das Beginnen des Ausgiessens einer Dosis in jeder Einstellposition begrenzbar ist, sodass der Weg des Dosierkolbens (10) und somit das Füllvolumen der Steuerkammer (14) wählbar ist.

2. Dosiervorrichtung für einen Stutzen zum Ausgiessen von definierten Dosen nach Anspruch 1, ***dadurch gekennzeichnet,* dass** der Weg des Dosierkolbens (10) auf seiner dem Behälter oder Schlauch zugewandten Seite begrenzbar ist, indem in der Dosiervorrichtung ein axial verlaufender Stab axial verschiebbar gelagert ist, und dieser Stab oben dichtend aus der Dosiervorrichtung ragt, und dass der Stab in seinem unteren Endbereich mit einem Steuerkammer-Begrenzer (31) für den Dosierkolben (10) verbunden ist, sodass bei axialem Verschieben des Stabes der Steuerkammer-Begrenzer (31) in seiner Lage axial verschiebbar ist und somit die Lage für das Beginnen des Ausgiessens einer Dosis in jeder Einstellposition begrenzbar ist, sodass der Weg des Dosierkolbens (10) und somit das Füllvolumen der Steuerkammer (14) wählbar ist.

3. Dosiervorrichtung für einen Stutzen zum Ausgiessen von definierten Dosen nach Anspruch 1, ***dadurch gekennzeichnet,* dass** die obere äussere Seite der Dosiervorrichtung mit einer Zahlen- oder Symbolskala (26) versehen ist, und der Drehknopf (8) auf einer Seite einen radial abstehenden Zeiger (27) aufweist, sodass dieser auf die Zahlen- oder Symbolskala (26) zeigt.

4. Dosiervorrichtung für einen Stutzen zum Ausgiessen von definierten Dosen nach einem der Ansprüche 1 bis 2, ***dadurch gekennzeichnet,* dass** der Drehknopf (8) mit radialen Griffrippen ausgerüstet ist.

5. Dosiervorrichtung für einen Stutzen zum Ausgiessen von definierten Dosen nach einem der vorangehenden Ansprüche, ***dadurch gekennzeichnet,* dass** der Ausguss (3) in der Dosiervorrichtung an einer Umfangsstelle einen Schnabel (25) aufweist, zum Formen und Ausgiessen eines Flüssigkeitsstrahls.

6. Dosiervorrichtung für einen Stutzen zum Ausgiessen von definierten Dosen nach einem der vorangehenden Ansprüche, ***dadurch gekennzeichnet,* dass** sie auf einen Stutzen aufschraub- oder aufprellbar ist.

7. Dosiervorrichtung für einen Stutzen zum Ausgiessen von definierten Dosen nach einem der vorangehenden Ansprüche, ***dadurch gekennzeichnet,* dass** die Zahlen- oder Symbolskala (26) auf eine Einstellung der Dosierkammer hinweist, bei der keine Dosisbeschränkung stattfindet, das heisst der Ausfluss nicht durch die Dosiereinrichtung unterbrochen wird.

8. Dosiervorrichtung für einen Stutzen zum Ausgiessen von definierten Dosen nach einem der vorangehenden Ansprüche, ***dadurch gekennzeichnet,* dass** die Zahlen- oder Symbolskala (26) auf eine Einstellung der Dosierkammer hinweist, bei der die Ausgiessöffnung verschlossen ist, das heisst keine Entleerung stattfinden kann.

9. Dosiervorrichtung für einen Stutzen zum Ausgiessen von definierten Dosen nach einem der Ansprüche 2 bis 3, ***dadurch gekennzeichnet,* dass** der Drehknopf (8), beziehungsweise der axial verlaufende Stab hohl ist, sodass er als Druckausgleicher während des Ausgiessvorganges wirkt und durch ihn Luft in den Behälter einströmbar ist.

10. Dosiervorrichtung für einen Stutzen zum Ausgiessen von definierten Dosen nach einem der Ansprüche 2 bis 3, ***dadurch gekennzeichnet,* dass** der Drehknopf (8) beziehungsweise der axial verlaufende Stab in seinem inneren Loch mit einem Gitter oder Sieb versehen ist, zur Verhinderung, dass aus dem Luftloch während des Ausgiessvorganges Flüssigkeit nach aussen dringen kann.

11. Dosiervorrichtung für einen Stutzen zum Ausgiessen von definierten Dosen nach einem der Ansprüche 2 bis 3, ***dadurch gekennzeichnet,* dass** die maximale und die minimale Dosiermenge der Dosiereinrichtung durch eine Vergrösserung oder Verkleinerung des Eintrittsloches (12) am Steuerkammerbegrenzer (31) variabel gestaltbar ist, bei gleichzeitiger prinzipieller Beibehaltung der restlichen Geometrie.

12. Dosiervorrichtung für einen Stutzen zum Ausgiessen von definierten Dosen nach einem der vorangehenden Ansprüche, ***dadurch gekennzeichnet,* dass** der nach unten ragende Fortsatz (5) des Dosierkolbens (10) in einer Einstellung in seinem Weg zum Ausgiessloch hin begrenzbar ist, sodass der Deckel (15) das Ausgussloch nicht mehr verschliessen kann und somit ein kontinuierlicher Ausfluss gewährleistet ist.

13. Dosiervorrichtung für einen Stutzen zum Ausgiessen von definierten Dosen nach einem der vorangehenden Ansprüche, ***dadurch gekennzeichnet,* dass** der nach unten ragende Fortsatz (5) des Dosierkolbens (10) an seinem unteren Rand mindestens eine seitlich abstehende Nase (38) aufweist, die in einer Dreh-Einstellung des Drehgriffs (8) sowie der Spindel (6) je einen Anschlag an einem Einsatz (41) findet, welcher mit einer Fassung (42) verbunden ist, die auf der Spindel (6) sitzt und verdrehsicher in der Dosiervorrichtung geführt ist, sodass beim Verdrehen der Spindel die Höhenlage des Einsatzes (41) verstellbar ist und mit dem Anschlagen der mindestens einen Nase (38) am Einsatz (41) der Fortsatz (5) mit seinem Deckel (15) in seinem Weg zum Ausgussloch hin begrenzt ist, sodass der Deckel (15) dieses nicht mehr verschliessen kann und somit ein kontinuierlicher Ausfluss gewährleistet ist.

## Claims

1. Dosing device for a spout for pouring defined doses from a container or hose,
consisting of a spout attachment which can be screwed or pressed onto the spout, optionally closable with a separate lid, with a dosing control chamber (14) of variable volume which is filled from empty to full during pouring,
said dosing control chamber (14) being formed by the space between a control chamber restrictor (31) and the interior of a dosing piston (10),
wherein the dosing control chamber (14) fills when a dose is poured, and wherein the dosing piston (10) closes the spout (3) when the control chamber (14) is full,
**characterized in that**
the control chamber restrictor (31) is axially displaceable in its position,
**in that** the dosing quantities to be poured out are adjustable by the control chamber restrictor (31), **in that** the path of the dosing piston (10) can be limited on its side facing the container or hose,
**in that** a spindle is rotatably mounted in the dosing device in an axial spindle socket (2), which spindle has at the top a rotary knob (8) which projects sealingly out of the dosing device at the front, and
**in that** the spindle (6) engages with its thread with its end region in the threaded sections (33) in the interior of an adjusting sleeve (30), and
the adjusting sleeve (30) is connected externally to the control chamber restrictor (31), so that when the spindle (6) is rotated, the control chamber restrictor (31) is axially displaceable in its position and thus the position for starting the pouring of a dose can be limited in any adjustment position
so that the path of the dosing piston (10) and thus the filling volume of the control chamber (14) can be selected.

2. Dosing device for a spout for pouring defined doses according to claim 1, **characterized in that** the path of the dosing piston (10) can be limited on its side facing the container or hose **in that** an axially extending rod is mounted axially displaceably in the dosing device, and this rod projects sealingly from the dosing device at the top, and **in that** the rod is connected in its lower end region to a control chamber restrictor (31) for the dosing piston (10), so that, when the rod is displaced axially, the control chamber restrictor (31) can be displaced axially in its position and thus the position for starting the pouring of a dose can be limited in any setting position, so that the path of the dosing piston (10) and thus the filling volume of the control chamber (14) can be selected.

3. Dosing device for a spout for pouring defined doses according to claim 2, **characterized in that** the upper outer side of the dosing device is provided with a numerical or symbolic scale (26), and the rotary knob (8) has a radially projecting pointer (27) on one side so that this pointer points to the numerical or symbolic scale (26).

4. Dosing device for a spout for pouring defined doses according to one of claims 2 to 3, **characterized in that** the rotary knob (8) is equipped with radial grip ribs.

5. Dosing device for a spout for pouring defined doses according to one of the preceding claims, **characterized in that** the spout (3) in the dosing device has a beak shaped spout (25) at a circumferential point, for forming and pouring a jet of liquid.

6. Dosing device for a nozzle for pouring defined doses according to one of the preceding claims, **characterized in that** it can be screwed or pressed onto a nozzle.

7. Dosing device for a nozzle for pouring defined doses according to one of the preceding claims, **characterized in that** the numerical or symbolic scale (26) indicates a setting of the dosing chamber at which no dose restriction takes place, i.e. the outflow is not interrupted by the dosing device.

8. Dosing device for a nozzle for pouring defined doses according to one of the preceding claims, **characterized in that** the numerical or symbolic scale (26) indicates a setting of the dosing chamber at which the pouring opening is closed, i.e. no emptying can take place.

9. Dosing device for a nozzle for pouring defined doses according to one of the claims 2 to 3, **characterized in that** the rotary knob (8) or the axially extending rod is hollow so that it acts as a pressure equalizer during the pouring process and air can flow through it into the container.

10. Dosing device for a spout for pouring defined doses according to one of the claims 2 to 3, **characterized in that** the rotary knob (8) or the axially extending rod is provided in its inner hole with a grid or screen to prevent liquid from escaping from the air hole to the outside during the pouring process.

11. Dosing device for a nozzle for pouring defined doses according to one of claims 2 to 3, **characterized in that** the maximum and minimum dosing quantities of the dosing device can be varied by enlarging or reducing the inlet hole (12) at the control chamber restrictor (31), while in principle maintaining the remaining geometry.

12. Dosing device for a nozzle for pouring defined doses according to one of the preceding claims, **characterized in that** the downwardly projecting extension (5) of the dosing piston (10) can be limited in its path towards the pouring hole in one setting, so that the lid (15) can no longer close the pouring hole and thus a continuous outflow is ensured.

13. Dosing device for a spout for pouring defined doses according to one of the preceding claims, **characterized in that** the downwardly projecting extension (5) of the dosing piston (10) has at its lower edge at least one laterally projecting lug (38) on both sides which, in a rotational setting of the rotary handle (8) and of the spindle (6), each finds an abutment on an insert (41) which is connected to a socket (42) which is seated on the spindle (6) and is guided in the dosing device in a rotationally secure manner, so that, when the spindle is rotated, the height position of the insert (41) can be adjusted and, when the at least one nose (38) abuts against the insert (41), the extension (5) with its lid (15) is limited in its path towards the pouring hole, so that the lid (15) can no longer close the latter and a continuous outflow is thus ensured.

## Revendications

1. Dispositif de dosage pour un bec verseur permettant de verser des doses définies à partir d'un récipient ou d'un tuyau, composé d'un dispositif de versement qui peut être vissé ou rebondi sur le bec verseur, pouvant éventuellement être fermé par un couvercle séparé, avec une chambre de commande de dosage (14) de volume variable qui est remplie de vide à plein pendant le versement,
ladite chambre de commande de dosage (14) étant formée par l'espace entre un limiteur de chambre de commande (31) et l'intérieur d'un piston de dosage (10),
dans lequel la chambre de commande de dosage (14) se remplit lorsqu'une dose est versée, et dans lequel le piston de dosage (10) ferme le bec (3) lorsque la chambre de commande (14) est pleine,
**caractérisé en ce que**
le limiteur de chambre de commande (31) est déplaçable axialement dans sa position,
**en ce que** les quantités de dose à verser peuvent être réglées par le limiteur de chambre de commande (31) **en ce que** la course du piston de dosage (10) peut être limitée sur son côté tourné vers le récipient ou le tuyau,
**en ce qu'**une broche est montée rotative dans le dispositif de dosage dans un logement de broche axial (2), laquelle broche présente un bouton rotative (8) en haut qui fait saillie de manière étanche à l'avant du dispositif de dosage, et
**en ce que** la broche (6) s'engage par son filetage avec sa zone d'extrémité dans les sections filetées (33) à l'intérieur d'un manchon de réglage (30), et
le manchon de réglage (30) est relié extérieurement au limiteur de chambre de commande (31), de sorte que lorsque la broche (6) est tournée, le limiteur de chambre de commande (31) est déplaçable axialement dans sa position et ainsi la position de démarrage du versement d'une dose peut être limitée dans chaque position de réglage,
afin de pouvoir sélectionner la course du piston de dosage (10) et donc le volume de remplissage de la chambre de commande (14).

2. Dispositif de dosage pour un bec verseur destiné à déverser des boîtes définies selon la revendication 1, **caractérisé en ce que** la course du piston de dosage (10) peut être limitée sur son côté tourné vers le récipient ou le tuyau **en ce qu'**une tige s'étendant axialement est montée de manière à pouvoir être déplacée axialement dans le dispositif de dosage, et cette tige fait saillie de manière étanche hors du dispositif de dosage en haut, et **en ce que** la tige est reliée dans sa zone d'extrémité inférieure à un limiteur de chambre de commande (31) pour le piston de dosage (10), de sorte que, lorsque la tige est déplacée axialement, le limiteur de chambre de commande (31) peut être déplacé axialement dans sa position et ainsi la position pour le début du versement d'une dose peut être limitée dans chaque position de réglage, de sorte que la course du piston de dosage (10) et ainsi le volume de remplissage de la chambre de commande (14) peuvent être sélectionnés.

3. Dispositif de dosage pour un bec verseur de boîtes définies selon la revendication 2, **caractérisé en ce que** le côté extérieur supérieur du dispositif de dosage est pourvu d'une échelle numérique ou symbolique (26), et le bouton rotatif (8) présente sur un côté une aiguille (27) faisant saillie radialement, de sorte que cette aiguille pointe vers l'échelle numérique ou symbolique (26).

4. Dispositif de dosage pour un bec verseur de boîtes définies selon l'une des revendications 2 à 3, **caractérisé en ce que** le bouton rotatif (8) est équipé de lèvres de préhension radiales.

5. Dispositif de dosage pour un bec verseur de boîtes définies selon l'une des revendications précédentes, **caractérisé en ce que** le bec (3) du dispositif de dosage présente un bec (25) en un point périphérique pour former et déverser un jet de liquide.

6. Dispositif de dosage pour un bec verseur de boîtes définies selon l'une des revendications précédentes, **caractérisé en ce qu'**il peut être vissé ou rebondi sur un bec verseur.

7. Dispositif de dosage pour un bec verseur de boîtes définies selon l'une des revendications précédentes, **caractérisé en ce que** l'échelle numérique ou symbolique (26) indique un réglage de la chambre de dosage auquel aucune restriction de dose n'a lieu, c'est-à-dire que l'écoulement n'est pas interrompu par le dispositif de dosage.

8. Dispositif de dosage pour un bec verseur de boîtes définies selon l'une des revendications précédentes, **caractérisé en ce que** l'échelle de chiffres ou de symboles (26) indique un réglage de la chambre de dosage pour lequel l'ouverture de déversement est fermée, c'est-à-dire qu'aucun vidage ne peut avoir lieu.

9. Dispositif de dosage pour un bec verseur de boîtes définies selon l'une des revendications 2 à 3, **caractérisé en ce que** le bouton rotatif (8) ou la tige s'étendant axialement est creux de sorte qu'il agit comme un égalisateur de pression pendant le processus de déversement et que l'air peut s'écouler à travers lui dans le récipient.

10. Dispositif de dosage pour un bec verseur de boîtes définies selon l'une des revendications 2 à 3, **caractérisé en ce que** le bouton rotatif (8) ou la tige s'étendant axialement est muni dans son trou intérieur d'une grille ou d'un tamis pour empêcher le liquide de pénétrer vers l'extérieur à partir du trou d'air pendant le processus de versement.

11. Dispositif de dosage pour un bec verseur de boîtes définies selon l'une des revendications 2 à 3, **caractérisé en ce que** la quantité de dosage maximale et la quantité de dosage minimale du dispositif de dosage peuvent être conçues de manière variable en agrandissant ou en réduisant le trou d'entrée (12) au niveau du limiteur de chambre de commande (31), tout en conservant en principe la géométrie restante.

12. Dispositif de dosage pour un bec verseur de boîtes définies selon l'une des revendications précédentes, **caractérisé en ce que** le prolongement (5) du piston de dosage (10), qui fait saillie vers le bas, peut être limité dans sa trajectoire vers le trou de coulée par un réglage, de sorte que le couvercle (15) ne puisse plus fermer le trou de coulée et qu'un écoulement continu soit ainsi assuré.

13. Dispositif de dosage pour un bec verseur de boîtes définies selon l'une des revendications précédentes, **caractérisé en ce que** le prolongement (5) du piston de dosage (10), qui fait saillie vers le bas, présente sur son bord inférieur au moins un ergot (38) faisant saillie latéralement des deux côtés, qui, dans une position de rotation de la poignée rotative (8) et de la broche (6), trouve chacun une butée sur un insert (41) qui est relié à une douille (42), qui repose sur la broche (6) et est guidé dans le dispositif de dosage de manière à être bloqué en rotation, de sorte que, lors de la rotation de la broche, la position verticale de l'insert (41) peut être ajustée et, lorsque le au moins un nez (38) heurte l'insert (41), la rallonge (5) avec son couvercle (15) est limitée dans son trajet vers le trou de coulée, de sorte que le couvercle (15) ne peut plus fermer ce dernier et qu'un écoulement continu est ainsi assuré.
